# EUROPEAN PATENT APPLICATION

(11) **EP 3 760 862 A1**
(43) Date of publication of application: **06.01.2021**
(21) Application number: 20163557.0
(22) Date of filing: 17.03.2020
(51) Int. Cl.: F03D 80/30

(54) **LIGHTNING DISCHARGE SYSTEM FOR A WIND TURBINE**

(30) Priority: 05.07.2019 ES 201900101
(71) Applicant: SIEMENS GAMESA RENEWABLE ENERGY INNOVATION & TECHNOLOGY, S.L., 31621 Sarriguren (Navarra) (ES)
(72) Inventor: Azcona Perez, Ignacío, 31263 Dicastillo (ES); Bienes Archel, Carlos, 31620 HUARTE (ES); Garcia Iniguez, Oscar, 31290 Amillano (ES); San Martin Zaragüeta, Maria, 31007 Pamplona (ES); Ubieto Aranguren, Xabier, 31621 Sarriguren (ES)
(74) Representative: Aspacher, Karl-Georg

(57) **Abstract**

The invention relates to a lightning discharge system for a wind turbine comprising a hub (1), a spinner (2) defining a protection space wherein the hub (1) is arranged, a blade (3) fixed to the hub (1), and a nacelle (4). The discharge system comprises a blade band (101) attached to the blade (3), a ring (102) facing the nacelle (4) and attached to the band (101) and to said nacelle (4), a respective contact device (103, 104) connecting the band (101) to the ring (102) and the ring (102) to the nacelle (4). The band (101) and the ring (102) are arranged in said space, and said ring (102) is further attached to the hub (1) such that it faces the nacelle (4) through a rear opening of the spinner (2).

## Description

### TECHNICAL FIELD

The present invention relates to lightning discharge systems for wind turbines, particularly for large-sized wind turbines.

### PRIOR ART

Due to their size, wind turbines are prone to lightning, generally the blades of wind turbines. If lightning strikes the tip of a blade of a wind turbine, an electric current flows through the different components of the wind turbine before being discharged to ground. Lightning causes high voltages and currents, and some of these components of the wind turbine cannot withstand such values and may be damaged. It is therefore usual in wind turbines to use lightning discharge systems to prevent these damages and discharge these currents and voltages to ground in a controlled and safe manner.

A wind turbine comprises a hub, a spinner defining an inner protection space wherein the hub is arranged in a protected manner, a plurality of blades attached to the hub (normally three), a nacelle facing the spinner, a generator arranged in the nacelle and a generator shaft connecting the generator to the hub. When the blades and the hub turn due to the action of the wind, this turn is transmitted to the generator through the generator shaft, and the generator transforms this turn (mechanical energy) into electrical energy. The known discharge systems generally connect in some manner the blades to the nacelle, and the nacelle to ground. Thus, when lightning strikes a blade, the latter is discharged to ground through the nacelle.

For solutions of this type, it is common to arrange a blade band of conductor material around of the corresponding blade, said blade band being connected to the nacelle. When lightning strikes said blade, is discharged to ground through the blade band and the nacelle.

Over time, the size of the wind turbines used has gradually increased. This means that the hub used is also larger, such that the blade band, which is normally arranged close to the root of the blade (point of connection to the hub), rotates outside the perimeter of the nacelle when the corresponding blade turns. This means that some solutions known as discharge systems are not applicable, and a specific solution for large-sized wind turbines is required, especially for those in which the blade band turns outside the perimeter of the nacelle.

US2016/0252078A1 discloses a lightning discharge system for large-sized wind turbines. The wind turbine comprises a hub, a spinner defining an inner protection space wherein the hub is arranged in a protected manner, a blade attached to the hub, and a nacelle connected to a reference point (ground). The discharge system comprises a blade band of an electric conductor material and which is attached to the blade, a ring of an electric conductor material and which is attached to the spinner, facing the nacelle and electrically attached to the blade band, a first contact device electrically connecting the blade band to the ring, and a second contact device electrically connecting the ring to the nacelle. Thus, when lightning strikes the blade, the lightning is discharged to the reference point (ground) through the discharge system, passing through the blade band, the ring and the nacelle, without it being derived to other components of the wind turbine which may be negatively affected if they were exposed to lightning.

### DISCLOSURE OF THE INVENTION

The object of the invention is to provide a lightning discharge system for a large-sized wind turbine, as defined in the claims.

The lightning discharge system is configured for a large-sized wind turbine, such that the lightning that may strike said wind turbine is discharged through said system, it being prevented from affecting sensitive parts of said wind turbine.

The wind turbine comprises a hub, a spinner defining an inner protection space wherein the hub is arranged, at least one blade fixed to the hub, and a nacelle connected to a reference point, such as ground, for example.

The discharge system comprises a blade band of an electric conductor material, which is attached to the blade and preferably arranged surrounding the perimeter of said blade, and a ring of an electric conductor material which faces the nacelle and which is electrically attached to said nacelle and to the blade band. The discharge system further comprises a first contact device electrically connecting the blade band to the ring, and a second contact device electrically connecting the ring to the nacelle. The discharge system is thus adapted to discharge lightning which may strike the blade to the reference point, through the blade band, the ring, the nacelle and the corresponding connections.

The spinner comprises a rear opening facing the nacelle, through which the protection space faces said nacelle. The blade band and the ring are arranged in the protection space defined by the spinner, such that both the blade band and the ring are protected by the spinner, the discharge system being more protected. The ring is further, attached to the hub such that it faces the nacelle through the rear opening, thus turning integrally with said hub.

The nacelle is attached to a reference point for the lightning discharge, such as ground, for example. The fact of arranging the ring facing the nacelle as has been described facilitates the electrical connection between said ring and said nacelle, and therefore facilitates both the assembly of the discharge system and the path which must be followed by the discharge current when the blade is struck by lightning.

In addition, the spinner is normally manufactured from a flexible material such fiberglass, and in the proposed discharge system, since the ring is attached to the hub and not to the spinner as occurs in the state of the art, a more secure and rigid attachment of the ring is offered, and the risk that the inherent flexibility of the spinner may affect the attachment to the ring, both its quality and its position (because the attachment point or area could be mobile in the case of attachment to the spinner, for example) is avoided.

These and other advantages and features of the invention will become evident in view of the figures and of the detailed description of the invention.

### DESCRIPTION OF THE DRAWINGS

Figure 1 shows a wind turbine.
Figure 2 shows the wind turbine of Figure 1 without the spinner and with an embodiment of a lightning discharge system according to the invention.
Figure 3 shows detail A-A of Figure 2.
Figure 4 shows an attachment device for attaching the ring to the hub of the discharge system according to Figure 2.
Figure 5 shows a contact element for securing the electric contact between the ring and a blade band of the discharge system according to Figure 2.

### DETAILED DISCLOSURE OF THE INVENTION

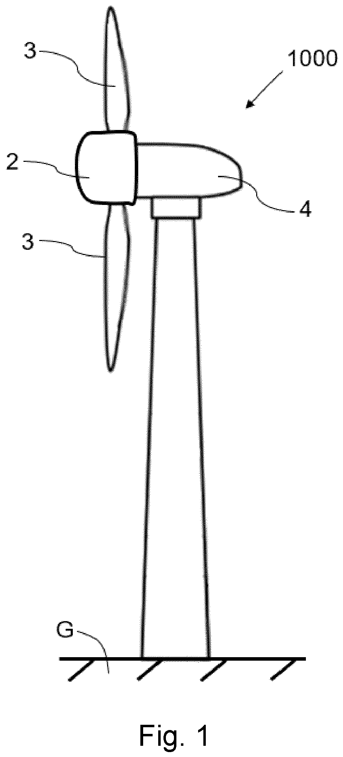

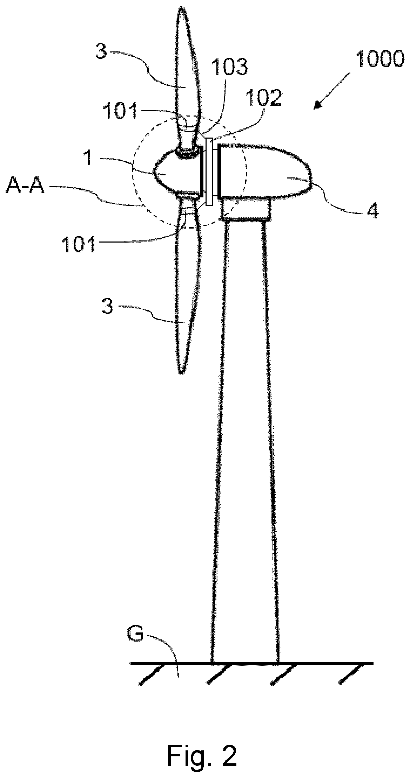

A large-sized wind turbine 1000 comprises a hub 1, a spinner 2 defining an inner protection space wherein the hub 1 is arranged, a plurality of blades 3 attached to the hub 1 and a nacelle 4, as shown in Figures 1 and 2.

The wind turbine 1000 further comprise a generator (not depicted in the figures) arranged in the nacelle 4, and a generator shaft (not depicted in the figures) attaching the generator to the hub 1. When the blades 3 and the hub 1 turn integrally due to the action of the wind, this turn is transmitted to the generator through the generator shaft, and the generator transforms this turn (mechanical energy) into electrical energy.

The discharge system of the invention is configured for its use in large-sized wind turbines 1000, and more specifically for discharging the lightning striking the blades 3 of the wind turbines 1000 to a reference point G (normally ground). The nacelle 4 is connected to the reference point G by means of a connection not depicted in the figures, such that the lightning is discharged to said reference point G through the nacelle 4.

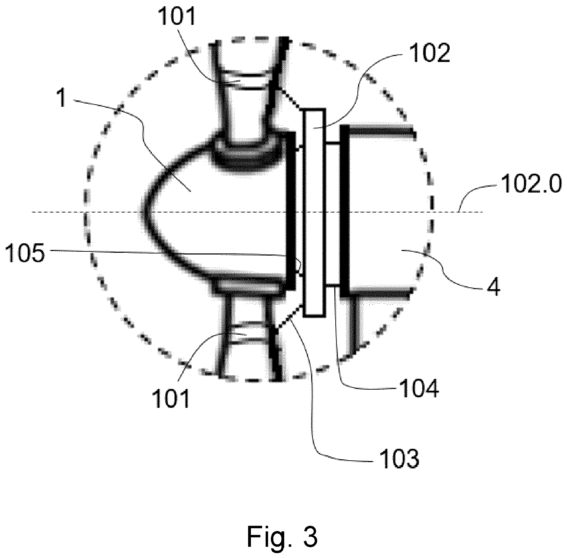

The discharge system comprises a blade band 101 for each blade 3 to which the discharge system is to be applied, to which the corresponding blade 3 is attached. The blade band 101 is of an electric conductor material, and preferably surrounds the corresponding blade 3. The discharge system further comprises a ring 102 of an electric conductor material, which faces the nacelle 4 and which is electrically attached to the blade band 101 by means of a first contact device 103 and to said nacelle 4 by means of a second contact device 104, as depicted in Figure 3 in a simplified manner. The ring 102 comprises a central shaft 102.0, preferably corresponding to the generator shaft.

In the event that the discharge system protects a plurality of blades 3, each blade 3 would comprise an associated blade band 101 and the ring 102 would be attached to all the blade bands 101 (a ring 102 per blade band 101 would not be required), the discharge system comprising a respective contact device 103 for the attachment between the ring 102 and each of the blade bands 101. Hereinafter, for the sake of simplicity and without a limiting nature, the discharge system aimed at a single blade 3 is described, but as it has been described it may be aimed at more blades 3, in which case it would comprise a blade band 101 associated with each blade 3 and its corresponding attachment to the ring 102.

The spinner 2 comprises a rear opening (not depicted in the figures) facing the nacelle 4, the protection space facing the nacelle 4 through said rear opening. It is usual for the spinner 2 to comprise an opening for the passage of the generator shaft, but the rear opening is an opening greater than, or additional to, the opening for the generator shaft. The function of the rear opening is described in more detail below.

The blade band 101 and the ring 102 are arranged in the protection space delimiting the spinner 2, thus being protected by said spinner 2. The ring 102 is attached to the hub 1 and is attached such that it faces the nacelle 4 through the rear opening of the spinner 2. This facilitates a reliable electrical and mechanical attachment between the ring 102 and the nacelle 4, by means of the second connection device 104. Thus, when referring to a large-sized wind turbine it can be interpreted as a wind turbine wherein the blade band 101 travels a path outside the perimeter of the nacelle 4 when it turns.

In the proposed discharge system, when lightning strikes a blade 3 it is discharged through the path formed by the corresponding blade band 101, the contact device 103 between the blade band 101 and the ring 102, the ring 102 itself, the contact device 104 attaching the ring 104 102 to the nacelle 4, the nacelle 4 itself and the connection between the nacelle 4 and the reference point G.

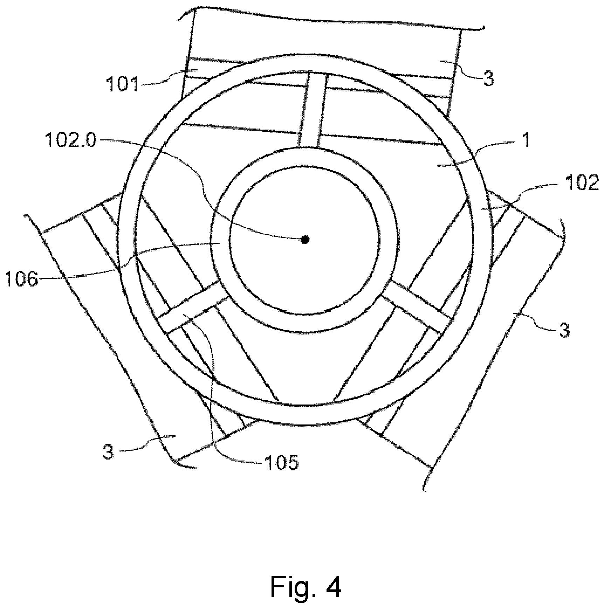

The discharge system comprises an attachment device for attaching the ring 102 to the hub 1, as shown with more detail in Figure 4. The attachment device is configured to provide an electrical insulation between the ring 102 and the hub 1. Thus, despite the ring 102 being attached to the hub 1, as a result of the type of attachment device used (its insulation) lightning is prevented from being discharged through the hub 1, or reaching the hub 1, and with the discharge system proposed the sensitive elements of the wind turbine 1000 are kept safe.

The fact that the ring 102 is attached to the hub 1 provides strength to said attachment, since the hub 1 is a rigid element of the wind turbine 1000, it further being ensured that said attachment is always in the same position, which always ensures the same discharge path for lightning striking the blade 3, without the risk of it being able to vary as is the case of an attachment to the spinner 2, which is of a flexible material (generally fiberglass), which might cause a displacement of the ring 102, and, therefore in a change in the path of the lightning in its discharge.

The attachment device comprises a plurality of attachment elements 105 homogeneously distributed around the central shaft 102.0 of the ring 102. Each attachment element 105 comprises an electrical insulation to insulate the ring 102 and the hub 101, preferably at the end closest to the ring 102.

The attachment device for attaching the ring 102 to the hub 1 comprises a number of attachment elements 105 which is a positive whole multiple of the number of blades 3 of the wind turbine 1000. The wind turbine preferably comprises three blades 3, the number of attachment elements 105 thus being equal to a positive whole multiple of three. In this case, the number of attachment elements 105 is preferably three (the positive whole multiple being equal to one), and are arranged one at 120° of the next (around the central shaft 102.0).

The discharge system can comprise a hub ring 106 fixed to the hub 1 and concentric to the ring 102, the attachment device being configured to attach the ring 102 to the hub ring 106. This facilitates the attachment between the ring 102 and the hub 1, since the hub 1 itself comprises a specific element for its attachment to the ring 102 (the hub ring 106), and provides rigidity to said attachment, it further being ensured that the ring 2 does not undergo relative displacements with respect to the hub 1, a safe and fixed path being maintained for lightning discharge. The hub ring 106 preferably comprises a smaller diameter than the ring 102, as shown in the example of Figure 4.

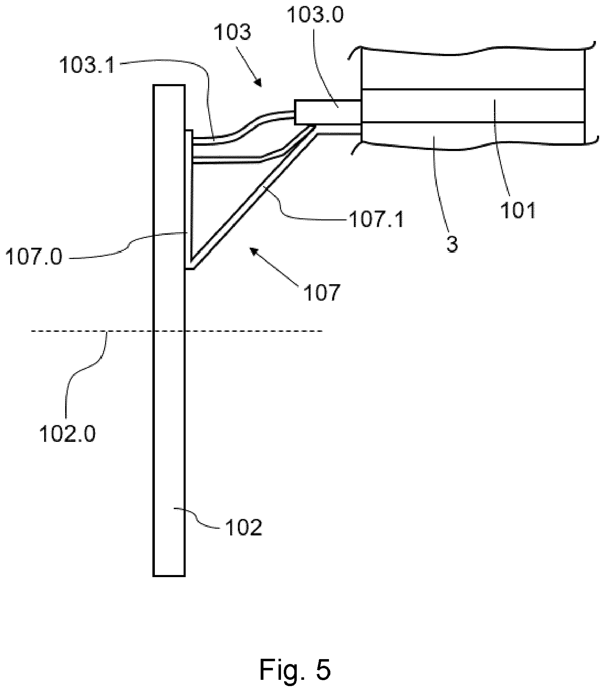

Preferably, as shown by way of example in Figure 5, the contact device 103 attaching the ring 102 to the blade band 101 comprises a head 103.0 which is in contact with the blade band 101 and at least one cable 103.1 attached at one end to the head 103.0 and at the other end to the ring 102. The discharge system can comprise at least one contact element 107 for ensuring the electrical contact between the ring 102 and the blade band 101. In this case the head 103.0 is attached to said contact element 107, said contact being ensured. Between the blade band 101 and the head 103.0 there can be a relative movement due to the turn of the corresponding blade 3, and without this contact element 107 it may occur that the contact between the head 103.0 and the blade band 101 is lost due to said relative movement, it being dangerous for the lack of contact to occur when lightning strikes said blade 3. The contact element 107 prevents this situation, ensuring said contact at all times.

The contact element 107 is preferably attached to the ring 102, but it can also be attached to the hub 1 or to another element turning integrally with the ring 102 and the hub 1, which as has been mentioned turn integrally without relative displacement between them, and to the first contact device 103 for ensuring the electrical contact of said contact device 103 with the blade band 101. Said contact element 107 is configured to apply a thrust force towards the contact band 101, and the first contact device 103 is attached to said contact element 107 such that said thrust force thrusts it against said blade band 101. In particular, the head 103.0 is the element of the first contact device 103 which is attached to the attachment element 107.

The contact element 107 comprises a fixing support 107.0 attached to the ring 102 or to the hub 1, and a flexible support 107.1 attached to said fixing support 107.0 and configured to exert the thrust force towards the blade band 101. The first contact device 103 (the head 103.0) is attached to said flexible support 107.1.

The head 103.0 comprises a carbon brush which is what carries out the electrical connection between the cable 103.1 and the blade band 101. Since it is of carbon it does not undergo the effect of corrosion, for example, its useful life being lengthened in comparison to brushes of another type. The head 103.0 comprises s a spark gap not depicted in the figures, separated from the brush by a determined distance of, preferably, between 5 - 7 mm, and attached to the attachment element 107. The brush thus ensures the electrostatic discharge and the spark gap ensures the discharge of high-current lightning which could damage the brush.

## Claims

1. Lightning discharge system for a wind turbine blade, the wind turbine (1000) comprising a hub (1), a spinner (2) defining an inner protection space wherein the hub (1) is arranged, a blade (3) fixed to the hub (1), and a nacelle (4) connected to a reference point (G), and said discharge system comprising a blade band (101) of an electric conductor material, which is attached to the blade (3), a ring (102) of an electric conductor material, which faces the nacelle (4), which is electrically attached to the blade band (101) and to said nacelle (4) and which comprises a central shaft (102.0), a first contact device (103) electrically connecting the blade band (101) to the ring (102), and a second contact device (104) electrically connecting the ring (102) to the nacelle (4), **characterized in that** the spinner (2) comprises a rear opening facing the nacelle (4) and through which the protection space faces said nacelle (4), the blade band (101) and the ring (102) being arranged in the protection space defined by the spinner (2), and said ring (102) further being attached to the hub (1) such that it faces the nacelle (4) through the rear opening of the spinner (2).

2. Lightning discharge system according to claim 1, comprising an attachment device for attaching the ring (102) to the hub (1), said attachment device being configured to provide an electrical insulation between the ring (102) and the hub (1).

3. Lightning discharge system according to claim 2, wherein the attachment device for attaching the ring (102) to the hub (1) comprises a plurality of attachment elements (105) homogeneously distributed around the central shaft (102.0) of the ring (102), each attachment element (105) comprising an electrical insulation at the end closest to the ring (102).

4. Lightning discharge system according to claim 3, wherein the attachment device for attaching the ring (102) to the hub (1) comprises a number of attachment elements (105) which is a positive whole multiple of the number of blades (3) of the wind turbine (1000).

5. Lightning discharge system according to any of claims 2 to 4, comprising a hub ring (106) fixed to the hub (1) and concentric to the ring (102), the attachment device (105) being configured to attach the ring (102) to the hub ring (106).

6. Lightning discharge system according to any of claims 1 to 5, comprising at least one contact element (107) attached to the ring (102) or to the hub (1) and to the first contact device (103) for ensuring the electrical contact of said first contact device (103) with the blade band (101), said contact element (107) being configured to apply a thrust force towards the contact band (101) and said first contact device (103) being attached to said contact element (107) such that said thrust force thrusts it against said blade band (101).

7. Lightning discharge system according to claim 6, wherein the first contact device (103) comprises a head (103.0) configured to contact the blade band (101) and at least one cable (103.1) attached at one end to the head (103.0) and at the other end to the ring (102), said head (103.0) being attached to the attachment element (107) .

8. Lightning discharge system according to claim 7, wherein the head (103.0) comprises a carbon brush which is what carries out the electrical connection between the cable (103.1) and the blade band (101), for the electrostatic discharge.

9. Lightning discharge system according to claim 8, wherein the head (103.0) comprises a spark gap separated from the carbon brush by a determined distance and attached to the attachment element (107).

10. Lightning discharge system according to any of claims 6 to 9, wherein the contact element (107) comprises a fixing support (107.0) attached to the ring (102) or to the hub (1) and a flexible support (107.1) attached to said fixing support (107.0) and configured to exert the thrust force towards the blade band (101), the first contact device (103) being attached to said flexible support (107.1).
